Europäisches Patentamt

European Patent Office

Office européen des brevets

(19)

(11) Veröffentlichungsnummer: **0 056 843**

**A2**

# (12) EUROPÄISCHE PATENTANMELDUNG

(21) Anmeldenummer: 81108331.0

(22) Anmeldetag: 14.10.81

(51) Int. Cl.³: **G 02 F 1/133**

(30) Priorität: 27.01.81 DE 3102626

(43) Veröffentlichungstag der Anmeldung:
04.08.82 Patentblatt 82/31

(84) Benannte Vertragsstaaten:
DE FR GB IT

(71) Anmelder: SIEMENS AKTIENGESELLSCHAFT Berlin
und München
Postfach 22 02 61
D-8000 München 22(DE)

(72) Erfinder: Tauer, Karl M., Dipl.-Ing.
Hohenwaldeckstrasse 20
D-8000 München 90(DE)

(54) **Passive elektrooptische Anzeigevorrichtung.**

(57) Die Erfindung bezieht sich auf ein Display mit einem frontseitigen Lichtleiter und einer seitlich angeordneten Lichtquelle. Es wird vorgeschlagen, den lichterzeugenden und verteilenden Teil der Anzeigevorrichtung folgendermaßen auszugestalten: Der Lichtleiter hat in seinem die optisch wirksame Displayschicht überdekkenden Abschnitt eine Keilform, d.h., die Rückseite des Keils liegt in der Displayebene, während die Keilvorderseite gegen die Displayebene etwas geneigt ist. Der Keilabschnitt hat mit den übrigen Displayteilen keinen optischen Kontakt, er empfängt das Kunstlicht durch seine Basisfläche; die Anordnung ist dabei so getroffen, daß das durch die Basisfläche empfangene Licht, das zunächst auf die geneigte Keilfläche trifft, wenigstens eine Totalreflexion erfährt. Die Öffnungswinkel für den Keilabschnitt liegen gewöhnlich zwischen 4° und 12°. In einem bevorzugten Ausführungsbeispiel ist der Lichtleiter über die Basisfläche des Keilabschnitts hinaus verlängert, nach hinten abgeknickt und in seinem geknickten Bereich verspiegelt und mit einer eingebetteten Lichtquelle versehen. Hat das Display zwei äußere Polarisatoren, so empfiehlt es sich, den Lichtleiter zwischen den vorderen Linearpolarisator und die vordere Trägerplatte zu plazieren.

Hauptanwendungsgebiet: Flüssigkristallanzeigen, insbesondere sogenannte "Drehzellen".

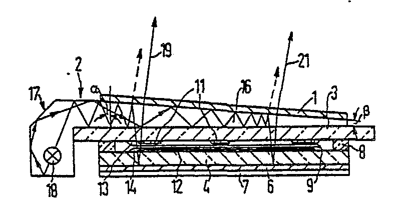

EP 0 056 843 A2

SIEMENS AKTIENGESELLSCHAFT          Unser Zeichen
Berlin und München                  VPA 81 P 1009 E

## Passive elektrooptische Anzeigevorrichtung

Die Erfindung betrifft ein Display gemäß dem Oberbegriff des Anspruchs 1. Eine solche Flüssigkristallanzeige wird in der DE-OS 26 55 166 beschrieben.

Passive Displays, die bekanntlich kein eigenes Licht erzeugen, müssen dann, wenn sie auch bei Dunkelheit anzeigen sollen, mit einer Zusatzbeleuchtung versehen werden. Die Anordnung ist dabei so zu treffen, daß die Anzeigevorrichtung unter günstigen Umgebungslichtverhältnissen ohne zusätzliches Licht auskommt und die Lichtquelle wahlweise zugeschaltet werden kann.

Diese Forderungen lassen sich erfüllen, wenn man die optisch wirksame Schicht mit einem halbdurchlässigen Spiegel hinterlegt, der bei Tage als Reflektor fungiert und nachts Licht von einer hinter der semi-transparenten Schicht angeordneten Lampe nach vorn durchtreten läßt. Ein solches Konzept, das sich inzwischen in der Praxis weitgehend durchgesetzt hat, ist jedoch mit einer Reihe von Mängeln behaftet: Der Transflektor hat einen nur mäßigen Reflexions- und Transmissionsgrad, so daß die Lichtquelle relativ häufig in Anspruch genommen werden muß, ein Umstand, der gerade bei passiven Anzeigevorrichtungen mit ihrem extrem geringen Schaltleistungsbedarf besonders unbefriedigend ist. Dabei lassen die Darstellungsqualitäten vielfach noch zu wünschen übrig; besonders kritisch sind die Verhältnisse bei Dämmerlicht, wo man lediglich die Wahl zwischen einem dunkel/

Les 1 Pj
19.01.1981

halbhell-Kontrast und einem hell/halbhell-Kontrast hat. Zudem ist das Display mit einem gewissen Schaltungsaufwand belastet, wenn man im Reflexionsbetrieb normal und im Transmissionsbetrieb komplementär ansteuern muß. (DE-OS 25 31 371).

Die Fachwelt hat sich deshalb schon relativ früh um die Entwicklung von rein reflektiven Displays mit schräg davor angeordneten Lichtquellen bemüht, zumal dieser Anzeigentyp im allgemeinen noch einen deutlich größeren Einblickwinkelbereich bietet als ein in Transmission betriebenes Display. Anfänglich arbeitete man mit spiegelnden Reflektoren und schräggestellten Masken, die von dem Kunstlicht denjenigen Anteil, der die ausgeschalteten Flüssigkristallbereiche durchsetzte und rückgespiegelt wurde, abfängt; so konnte der Betrachter nur das Kunstlicht wahrnehmen, das auf aktivierte Flüssigkristallbereiche traf und - an der Blende vorbei - in seine Richtung gestreut wurde (vergl. hierzu den in "Electronic Engineering" vom Mai 1974 erschienenen Artikel "The Illumination of Liquid Crystal Displays"). Es liegt auf der Hand, daß eine solche Ausführung eine erhebliche Bautiefe erfordert und den theoretisch möglichen Betrachtungswinkelbereich stark einschränkt.

Diese Nachteile entfallen, wenn man das künstliche Licht auf eine dem Display vorgesetzte Folie fallen läßt und der Folienoberfläche eine solche Struktur gibt, daß die auftreffende Strahlung in das Displayinnere umgelenkt wird. Die Hauptschwierigkeit bei diesem Lösungsansatz besteht darin, ein Oberflächenprofil zu finden, das das Beleuchtungslicht möglichst reflexionsarm und gleichmäßig verteilt weiterleitet. Setzt man, wie dies in der eingangs zitierten Offenlegungsschrift vorgesehen ist, die Folienoberfläche aus zueinander parallelen Mikroprismen zusammen und gestaltet man die Prismen so, daß sie eine der Lichtquelle zugewandte, senkrecht zur Displayebene verlaufende Fläche und eine der Lichtquelle abgewandte, gegen die Haupteinfallsrichtung des Lichtes leicht geneigte Fläche haben, so werden die Lichtstrahlen im wesentlichen senkrecht zur Displayebene wieder zurückgeworfen. Die optischen Eigenschaften einer solchen Anzeige sind allerdings noch keineswegs optimal: Der überwiegende Teil des auftreffenden Lichts geht durch Grenzflächenreflexionen verloren, das Lichtstrahlbündel muß möglichst parallel sein und das Prismenmuster tritt optisch in Erscheinung. Überdies wird die Displayfertigung damit belastet, daß die Folie mittels eines geeigneten Klebers sorgfältig in einen fehlerfreien optischen Kontakt mit ihrer Unterlage gebracht werden muß.

Aufgabe der vorliegenden Erfindung ist es, den Lichtleiter einer Anzeigevorrichtung der eingangs genannten Art so auszubilden, daß er wenig Platz beansprucht, keinen Anlaß zu optischen Störungen gibt, über eine hohe Lichtausbeute verfügt und ohne sonderlichen Aufwand aufgebracht werden kann. Diese Aufgabe wird erfindungsgemäß durch ein Display mit den Merkmalen des Patentanspruchs 1 gelöst.

Der Lösungsvorschlag macht sich folgendes Lichtleitungsphänomen zunutze. Ein Lichtstrahl, der in ein keilförmiges Element durch dessen Grundfläche eindringt und an einer der beiden schrägen Keilflächen eine Totalreflexion erfährt, wird durch weitere Totalreflexionen im Inneren des Elements zur Keilspitze hin fortgeleitet. Bei jeder dieser Reflexionen wird nun der Einfallswinkel $\alpha$ des Strahls kleiner, und zwar um den Betrag
des Winkels $\beta$ , den die beiden Schrägflächen des Keils
miteinander bilden. Unterschreitet $\alpha$ den Mindestwert
für eine Totalreflexion, so verläßt der Strahl den
Keil, und zwar entweder in einer vom Display wegweisenden Richtung oder zum Display hin. Auf diese Weise kann
bei einer erfindungsgemäßen Anzeigevorrichtung etwa die
Hälfte des in den Keilabschnitt eingefluteten Kunstlichts genutzt werden. Die Distanz, die das mehrfach
reflektierte Licht im Keilabschnitt zurücklegt, hängt
vom Öffnungswinkel des Keils und vom Einfallswinkel bei
der Erstreflexion ab. Deshalb kann man durch Wahl des
Winkels $\beta$ , des Ortes der Lichtquelle und der Raumwinkelverteilung der von der Lichtquelle abgegebenen Strahlung festlegen, auf welcher Breite des Keilabschnittes
das Licht nach hinten ausgekoppelt wird.

Versuche haben gezeigt, daß man mit dem erfindungsgemäß
vorgesehenen Lichtleiter das Anzeigenfeld relativ gleichmäßig ausleuchten kann; insbesondere treten keine störenden Spiegelungen auf. Der Lichtleiter läßt sich relativ flach halten, da man mit sehr geringen Öffnungswinkeln für den Keilabschnitt auskommt - typische $\beta$ -
Werte liegen zwischen 5 Grad und 10 Grad. Die erforderliche Trennung zwischen Keil und Keilträger läßt sich
leicht realisieren: Sie kommt schon dann in ausreichendem Maße zustande, wenn man ohne Kleber arbeitet und
den Lichtleiter einfach auf die Trägerplatte auflegt.

Aus der DE-OS 25 52 278 ist es an sich schon seit längerem bekannt, einen keilförmigen Lichtverteiler bei
Flüssigkristallanzeigen zu verwenden. Bei dieser vorbekannten Ausführung befindet sich der Lichtleiter allerdings hinter der eigentlichen Flüssigkristallzelle;
außerdem wird der Keil aus einem Bündel von optisch voneinander getrennten Lichtleitfasern gebildet. Somit
gelangt die Strahlung auf andere Weise von der Lichtquelle zum Betrachter.

Vorteilhafte Ausgestaltungen und Weiterbildungen der
Erfindung sind Gegenstand zusätzlicher Ansprüche.

Der Lösungsvorschlag soll nun an Hand eines bevorzugten
Ausführungsbeispiels, das in der beigefügten Figur in
einem Seitenschnitt dargestellt ist, näher erläutert
werden.

Die Figur zeigt ein Flüssigkristalldisplay mit einem
vorderen Linearpolarisator 1, einem Lichtleiter 2,
einer vorderen Trägerplatte (Vorderplatte) 3, einer
hinteren Trägerplatte (Rückplatte) 4, einem hinteren,
zum vorderen gekreuzten Linearpolarisator 6 und einem
diffusen Reflektor 7. Der Polarisator 1 liegt auf dem
Leiter 2, der seinerseits auf der Platte 3 ruht. Die
drei Teile sind trotz ihrer Berührungskontakte optisch
ausreichen voneinander entkoppelt, da ihre Oberflächen
rauh sind. Die beiden Trägerplatten, von denen die vordere die hintere an zwei Seiten überragt, werden durch
einen Rahmen 8 in einem vorgegebenen Abstand dicht miteinander verbunden. Die durch den Rahmen und die beiden
Trägerplatten gebildete Kammer ist mit einer Flüssigkristallschicht 9 gefüllt. Die beiden Platten sind auf
ihren einander zugewandten Flächen jeweils mit Elektroden (Vorderelektrode aus getrennt ansteuerbaren Segmentelektroden 11, durchgehende Rückelektrode 12) sowie mit
Orientierungsschichten 13 bzw. 14 versehen. Das Display
arbeitet im vorliegenden Fall nach dem Prinzip der so-

0056843

genannten "Drehzelle", das in der DE-AS 21 58 563 ausführlich dargestellt wird.

Der Lichtleiter ist folgendermaßen gestaltet. Er hat in seinem die Rückplatte überdeckenden Teil ("Keilabschnitt"), der in der Figur mit der Bezugsziffer 16 versehen ist, die Form eines Keiles. Die Keilform kommt dadurch zustande, daß die Rückseite des Keilabschnitts parallel zur Plattenebene liegt und die Frontseite gegen die Plattenebene um einen Winkel $\beta$ geneigt ist. $\beta$ liegt in der Regel zwischen $4^\circ$ und $12^\circ$ und hat vorwiegende Werte zwischen $6^\circ$ und $9^\circ$. Der Leiterteil, der sich an die Basisfläche des Keilabschnitts anschließt, ist um $90^\circ$ nach hinten geknickt und an seiner äußeren Knickkante abgeschrägt. Dieser Teil, der mit einer Schicht 17 verspiegelt ist, enthält ein Lämpchen 18.

Um zu veranschaulichen, welchen Weg die von der Lichtquelle 18 emittierte Strahlung im Lichtleiter nimmt, sind die Verläufe zweier willkürlich herausgegriffener Strahlen 19, 21, eingezeichnet. Man erkennt, daß die Einfallswinkel $\alpha$ , also diejenigen Winkel, die Strahlen jeweils mit den Grenzflächennormalen einschließen, von Reflexion zu Reflexion abnehmen, bis die Strahlen schließlich zum Reflektor hin austreten. Sie werden dort zurückgeworfen und verlassen dann das Display endgültig.

Der dargestellte Anzeigentyp ist nicht nur kompakt und lichtstark sondern zeichnet sich auch            dadurch aus, daß die angesteuerten Segmente keine störenden Schatten werfen. Ein solcher Parallaxeneffekt ist normalerweise bei schrägem Lichteinfall besonders ausgeprägt und läßt sich praktisch vollständig beseitigen, wenn man, wie im vorliegenden Fall, das Beleuchtungslicht unpolarisiert in die Flüssigkristallschicht schickt (vergl. hierzu die ältere, nicht vorveröffentlichte Patentanmeldung P 29 37 277.8).

Die Erfindung ist nicht auf das dargestellte Ausführungsbeispiel beschränkt. So hat der Fachmann bei der Formgebung des Lichtleiters noch einen erheblichen Gestaltungsspielraum. Insbesondere könnte man beim Keilabschnitt von einer mathematisch strengen Keilform abgehen, falls sich dies als zweckmäßig erweist; beispielsweise ließe sich die Verteilung des in das Display eingekoppelten Kunstlichts dadurch beeinflussen, daß man die Keilfrontseite - konvex oder konkav - krümmt. Der Öffnungswinkel $\beta$ ist in diesem Fall ein Mittelwert.

6 Patentansprüche,
1 Figur.

Patentansprüche

1. Passive elektrooptische Anzeigevorrichtung mit

a) zwei zueinander parallelen, in Betrachtungsrichtung hintereinander liegenden Trägerplatten (Vorderplatte, Rückplatte),

b) einer Schicht aus einem zwischen optisch verschiedenen Zuständen schaltbaren Medium, insbesondere einem Flüssigkristall, zwischen den beiden Trägerplatten,

c) einem Reflektor hinter der Rückplatte,

d) einer Lichtquelle und

e) einem Licht aus der Lichtquelle zum Reflektor hin umlenkenden Körper (Lichtleiter), der aus einem transparenten Material mit einem Brechungsindex $> 1$ besteht, vor der Vorderplatte angeordnet ist, wenigstens die schaltbare Schicht überdeckt und zumindest in seinem schichtendeckenden Abschnitt, eine Oberfläche hat, die auf der vom Betrachter abgewandten Seite (Rückseite) parallel zur Schichtebene verläuft und auf der dem Betrachter zugewandten Seite (Frontseite) mindestens eine zur Schichtebene geneigte Teilfläche enthält,

d a d u r c h   g e k e n n z e i c h n e t , daß

f) die Frontseite des schichtendeckenden Lichtleiterabschnitts (Keilabschnitt 16) nur eine einzige geneigte Teilfläche enthält, die dem Lichtleiterabschnitt eine Keilform gibt,

g) das Licht der Lichtquelle (18) in den Keilabschnitt (16) durch dessen Basisfläche eintritt,

h) der Öffnungswinkel des Keilabschnitts (16) so groß ist, daß das durch die Basisfläche eintretende Licht der Lichtquelle (18) wenigstens beim erstmaligen Auftreffen auf die geneigte Teilfläche
eine Totalreflexion erfährt, und
i) der Keilabschnitt (16) keinen optischen Kontakt
mit der Vorderplatte (3) hat.

2. Anzeigevorrichtung nach Anspruch 1, d a d u r c h
g e k e n n z e i c h n e t , daß der Öffnungswinkel
des Keilabschnitts (16) zwischen 4° und 12°, insbesondere zwischen 6° und 9°, liegt.

3. Anzeigevorrichtung nach Anspruch 1 oder 2,
d a d u r c h   g e k e n n z e i c h n e t , daß der
Reflektor (7) diffus reflektiert.

4. Anzeigevorrichtung nach einem der Ansprüche 1 bis 3,
d a d u r c h   g e k e n n z e i c h n e t , daß die
Lichtquelle (18) in den Lichtleiter (1) baulich integriert ist.

5. Anzeigevorrichtung nach einem der Ansprüche 1 bis 4,
d a d u r c h   g e k e n n z e i c h n e t , daß der
Lichtleiter (1) über die Basisfläche des Keilabschnitts
(16) hinaus verlängert und in diesem Teil nach hinten
weggeknickt ist.

6. Anzeigevorrichtung nach einem der Ansprüche 1 bis 5,
bei der sich vor der Vorderplatte und hinter der Rückplatte jeweils ein Polarisator befindet,
d a d u r c h   g e k e n n z e i c h n e t , daß der
Lichtleiter (1) zwischen dem vorderen Linearpolarisator (2) und der Vorderplatte (3) angeordnet ist und
auch zu dem vorderen Linearpolarisator (2) keinen optischen Kontakt hat.